# EUROPÄISCHE PATENTSCHRIFT

(11) **EP 1 778 525 B1**
(45) Veröffentlichungstag und Bekanntmachung des Hinweises auf die Patenterteilung: **11.03.2009**
(21) Anmeldenummer: 05848546.7
(22) Anmeldetag: 30.11.2005
(51) Int. Cl.: B60R 21/233, B60R 21/239

(54) **GASSACK FÜR EIN AIRBAGMODUL EINES KRAFTFAHRZEUGES**
GAS BAG FOR AN AIRBAG MODULE OF A MOTOR VEHICLE
SAC A GAZ POUR LE MODULE AIRBAG D'UN VEHICULE A MOTEUR

(30) Priorität: 02.12.2004 DE 102004059085
(43) Veröffentlichungstag der Anmeldung: 02.05.2007
(73) Patentinhaber: TAKATA - PETRI AG, 63743 Aschaffenburg (DE)
(72) Erfinder: BACHRATY, Milan, London UB68JU (GB); TERLUNEN, Andreas, 16567 Mühlenbeck (DE); LIEBETRAU, Matthias, 14612 Falkensee (DE)
(74) Vertreter: Baumgärtel, Gunnar
(86) Internationale Anmeldenummer: PCT/DE2005/002181
(87) Internationale Veröffentlichungsnummer: WO 2006/058532

(56) Entgegenhaltungen:
- EP-A- 0 739 790
- EP-A- 0 922 616
- EP-A- 1 088 708
- EP-A- 1 452 403
- WO-A-01/26936
- US-A- 5 219 179
- US-A- 5 464 250
- US-A- 5 603 526
- US-B1- 6 254 121
- PATENT ABSTRACTS OF JAPAN Bd. 017, Nr. 018 (M-1352), 13. Januar 1993 (1993-01-13) & JP 04 244453 A (NISSAN MOTOR CO LTD), 1. September 1992 (1992-09-01)

## Beschreibung

Die Erfindung betrifft einen Gassack für ein Airbagmodul eines Kraftfahrzeugs nach dem Oberbegriff des Patentanspruchs 1.

Ein derartiger Gassack ist in einem Crash-Fall - durch sensorgesteuertes Aktivieren eines zugeordneten Gasgenerators - zum Schutz eines Fahrzeuginsassen mit Gas befüllbar. Er umfasst eine als untere Gassacklage (Unterplatte des Gassackes, z.B. in Form einer Gewebelage) bezeichnete erste Gassacklage und eine als obere Gassacklage (Oberplatte des Gassackes, z.B. in Form einer Gewebelage) bezeichnete zweite Gassacklage, die an ihren aneinander anliegenden äußeren Rändern zur Bildung eines Gassackes miteinander verbunden, z.B. vernäht, sind, wobei die als obere Gassacklage bezeichnete zweite Gassacklage bei bestimmungsgemäßem Einbau des Gassackes in ein Airbagmodul im aufblasbaren Zustand dem zu schützenden Fahrzeuginsassen zugewandt ist. Die Begriffe "untere Gassacklage" und oberen Gassacklage" beziehen sich somit nicht auf ein räumliches "oben" oder "unten", sondern sie beziehen sich vielmehr auf die Anordnung der jeweiligen Gassacklage in Bezug auf den zu schützenden Fahrzeuginsassen.

Ferner ist eine zwischen der oberen Gassacklage und der unteren Gassacklage angeordnete Zwischenlage (Zwischenplatte, z.B. in Form einer Gewebelage) vorgesehen, die den von der oberen Gassacklage und der unteren Gassacklage umschlossenen Innenraum des Gassackes in zwei Kammern unterteilt. Dabei ist die untere Gassacklage mit einer Gasaustrittsöffnung versehen, durch die hindurch aus einem Gasgenerator stammendes Gas in die von der unteren Gassacklage und der Zwischenlage begrenzte erste Kammer des Gassackes gelangen kann, und es sind in der Zwischenlage Austrittsmittel vorgesehen, durch die hindurch Gas aus der ersten Kammer des Gassackes in die von der oberen Gassacklage und der Zwischenlage sowie von Teilen der unteren Gassacklage umschlossene zweite Kammer des Gassackes gelangen kann, so dass je nach Menge der durch die Eintrittsöffnung in den Gassack eingeleiteten Gase wahlweise im Wesentlichen nur die erste Kammer oder beide Kammern des Gassackes mit Gas gefüllt und hierdurch aufgeblasen werden.

Der Zustand, in dem im Wesentlichen nur die erste Kammer des Gassackes aufgeblasen ist, lässt sich dabei von dem Zustand, in dem beide Kammern des Gassackes aufgeblasen sind, vor allem durch den Innendruck in den beiden Kammern des Gassackes unterscheiden. Im erstgenannten Fall ist der Innendruck in der ersten Kammer des Gassackes um ein Vielfaches höher als in der zweiten Kammer des Gassackes, in die Gas allenfalls zur Entlüftung der ersten Kammer des Gassackes strömt. Im erstgenannten Fall liegt also lediglich in der ersten Kammer des Gassackes ein Druckniveau vor, das einen effektiven Schutz eines auf den Gassack aufprallenden Fahrzeuginsassen durch Energieabbau ermöglichen kann. Im zweitgenannten Fall ist daher das Druckniveau in den beiden Kammern des vollständig aufgeblasenen Gassackes zumindest von der Größenordnung her übereinstimmend; die Abweichungen sollten nicht bei mehr als 50 % liegen. Im erstgenannten Fall unterscheidet sich demgegenüber der Druck in der ersten Kammer von dem Druck in der zweiten Kammer regelmäßig um Größenordnungen.

Zum wahlweisen Aufblasen des Gassackes mit einer kleineren Menge oder einer größeren Menge Gas kann dabei ein mehrstufiger, insbesondere zweistufiger, Gasgenerator verwendet werden, von dem in Abhängigkeit von der Größe und/oder dem Gewicht und/oder der Sitzposition des zu schützenden Fahrzeuginsassen entweder nur die erste Stufe oder mehrere (beide) Stufen gezündet werden. So wird etwa lediglich die erste Stufe des besagten Gasgenerators gezündet, wenn es sich bei dem zu schützenden Fahrzeuginsassen um eine besonders kleine oder eine besonders leichte Person handelt, z. B. eine so genannte 5%-Frau. Demgegenüber werden mehrere Stufen des Gasgenerators zur Erzeugung einer größeren Menge Gas erzeugt, wenn es sich bei dem zu schützenden Fahrzeuginsassen um eine größere und/oder schwerere Person handelt, z. B. einen so genannten 50%-Mann oder 95%-Mann. Die Größe und/oder das Gewicht sowie die Sitzposition des jeweils zu schützenden Fahrzeuginsassen können dabei mittels bekannter Sensoren, z. B. Positions- oder Gewichtssensoren, detektiert werden. In Abhängigkeit von der beim Aktivieren des Gasgenerators bestehenden Position, insbesondere Sitzposition, des zu schützenden Fahrzeuginsassen, können Variationen der vorstehend angegebenen Regel vorgesehen sein. So kann etwa zum Schutz eines besonders großen Fahrzeuginsassen nur eine Stufe des Gasgenerators gezündet und dementsprechend im Wesentlichen nur eine Kammer des Gassackes aufgeblasen werden, wenn sich der zu schützende Insasse mit seinem Kopf oder Oberkörper besonders nah bei dem entsprechenden Airbagmodul befindet. Hierdurch sollen Verletzungen des Insassen durch den sich beim Aufblasen ausdehnenden Gassack vermieden werden.

Eine solche Anordnung ist aus der JP-A 09-188216 bekannt.

Weitere Airbaganordnungen bei denen ein Gassack eine obere und eine untere Gassacklage und eine zwischen diesen angeordnete Zwischenlage aufweist, wobei durch die Zwischenlage der Gassack in zwei mit Gas befüllbare Kammern unterteilt ist, sind aus der gattungsgemäßen EP 0 739 790 A2, aus der EP 1 452 403 A1 und der US 6,254,121 B1 bekannt.

In der WO 01/26936 A1 ist eine Airbageinrichtung mit einem inneren und einem äußeren Gassack beschrieben, die beide an einem Einfüllstutzen eines Gasgenerators angeordnet und nicht miteinander verbunden sind. Dabei ist zwischen den beiden Gassäcken jedoch keine Zwischenlage angeordnet.

Der Erfindung liegt das Problem zugrunde, einen Gassack für ein Airbagmodul der eingangs genannten Art weiter zu verbessern.

Dieses Problem wird erfindungsgemäß durch die Schaffung eines Gassackes mit den Merkmalen des Patentanspruchs 1 gelöst.

Danach ist die Zwischenlage, die das Innere des Gassackes in zwei Kammern unterteilt, an der ersten, unteren Gassacklage des Gassackes befestigt und derart versetzt bezüglich der unteren Gassacklage angeordnet, dass der Abstand zwischen einem umlaufenden äußeren Rand der Zwischenlage und einem umlaufenden äußeren Rand der unteren Gassacklage entlang des umlaufenden äußeren Randes der Zwischenlage variiert, und die Austrittsmittel, durch die Gas von der ersten Kammer in die zweite Kammer des Gassackes gelangen kann, sind zumindest teilweise derart druckgesteuert, dass der Austrittsquerschnitt der Austrittsmittel von dem Druck in der ersten Kammer und somit der Druckdifferenz zwischen der ersten Kammer und der zweiten Kammer des Gassackes abhängt.

Die erfindungsgemäße Lösung hat den Vorteil, dass die Entfaltungstiefe der ersten Kammer beim Aufblasen des Gassackes im Vergleich zu der Entfaltungstiefe des gesamten Gassackes erheblich reduziert ist, so dass bei Verwendung des Gassackes für ein Front-Airbagmodul, insbesondere ein Fahrer-Airbagmodul, ein verletzungsträchtiges Anschließen eines Insassen, der seinen Sitz in eine der vordersten Sitzpositionen verstellt hat und sich daher sehr nah bei dem Airbagmodul befindet, vermieden wird.

Die erfindungsgemäße Lösung ist somit insbesondere vorteilhaft, wenn das Aufblasen des Gassackes mit einer geringeren Menge Gas, so dass im Wesentlichen nur die erste Kammer des Gassackes befüllt wird, speziell bei sehr kleinen bzw. sehr leichten Personen, z. B. der so genannten 5%-Frau, vorgesehen ist.

Die reduzierte Entfaltungstiefe der ersten Kammer eines erfindungsgemäß gestalteten Gassackes betrifft dabei sowohl die Entfaltung des Gassackes entlang der Richtung, entlang der sich die Zwischenlage und die untere Gassacklage beim Aufblasen voneinander entfernen, als auch die Entfaltung entlang der senkrecht hierzu erstreckten Richtungen (radiale Richtungen bei einem Gassack, der aus im Wesentlichen kreisförmigen Gassacklagen besteht).

Die Zwischenlage ist hierzu vorteilhaft ausschließlich mit der unteren Gassacklage verbunden, und zwar beabstandet von den Verbindungsstellen, entlang derer die untere Gassacklage und die obere Gassacklage miteinander verbunden sind. Die Verbindung der Zwischenlage mit der unteren Gassacklage erfolgt dabei bevorzugt entlang des äußeren Randes der Zwischenlage und als Verbindungstechnik ist insbesondere das Vernähen der beiden Lagen geeignet.

Im Ergebnis ist somit die erste Kammer des Gassackes von der unteren Gassacklage und der Zwischenlage des Gassackes begrenzt, während die zweite Kammer des Gassackes von der oberen Gassacklage und der Zwischenlage sowie einem Teil der unteren Gassacklage begrenzt wird.

Dadurch, dass die Austrittsmittel, über die die erste Kammer mit der zweiten Kammer des Gassackes in Strömungsverbindung steht, druckgesteuert sind, lässt sich der Austritt von Gas aus der ersten Kammer in die zweite Kammer gezielt in Abhängigkeit davon steuern, wie groß der in der ersten Kammer aufgebaute Innendruck ist bzw. wie groß die hiervon abhängige Druckdifferenz zwischen der ersten Kammer und der zweiten Kammer des Gassackes ist. Hierdurch kann ein erster, kleinerer Austrittsquerschnitt von der ersten in die zweite Kammer zur Verfügung gestellt werden, wenn der Gassack mit einer geringeren Menge Gas befüllt wird, so dass im Wesentlichen nur die erste Kammer des Gassackes befüllt wird, und die Austrittsöffnungen zwischen der ersten und zweiten Kammer im Wesentlichen dazu dienen, nach dem Aufprall des zu schützenden Insassen auf den Gassack zu Zwecken des Energieabbaus das in der ersten Kammer befindliche Gas in die zweite Kammer abzulassen. Wird demgegenüber die erste Kammer des Gassackes zum Schutz eines größeren bzw. schwereren Fahrzeuginsassen mit einer größeren Menge an Gas befüllt, so kann der erhöhte Druck in der ersten Kammer dazu führen, dass druckgesteuert ein vergrößerter Austrittsquerschnitt der Austrittsöffnungen zwischen der ersten und zweiten Kammer zur Verfügung steht und die mittels eines Gasgenerators in die erste Kammer eingelassenen Gase unmittelbar in die zweite Kammer weitergeleitet werden, so dass beide Kammern des Gassackes mit einem entsprechend großen Volumen für den zu schützenden Fahrzeuginsassen bereitgehalten werden.

Bevorzugt erfolgt die Anbindung der Zwischenlage an die untere Gassacklage in der Weise, dass das Verhältnis der Volumina der ersten Kammer und der zweiten Kammer im vollständig aufgeblasenen Zustand des Gassackes zwischen 3:2 und 3:1 liegt.

Sowohl zum Entlüften der ersten Kammer des Gassackes in einem Fall, in dem zum Schutz einer vergleichsweise kleinen bzw. leichten Person lediglich die erste Kammer des Gassackes mit Gas befüllt worden ist, als auch zum Weiterleiten der durch die Gaseintrittsöffnung zunächst in die erste Kammer des Gassackes einströmenden Gase in die zweite Kammer in einem Fall, in dem beide Kammern des Gassackes mit Gas befüllt werden sollen, sind in der Zwischenlage Austrittsmittel in Form mindestens einer Austrittsöffnung vorgesehen, über die die erste Kammer mit der zweiten Kammer in Strömungsverbindung steht. Hierbei kann es sich einerseits um mindestens eine permanent offene Austrittsöffnung handeln und/oder um mindestens eine druckgesteuerte Austrittsöffnung, die erst geöffnet wird, wenn der Druck der durch die Gaseintrittsöffnung in die erste Kammer eingeströmten Gase einen Grenzwert überschreitet, so dass erst dann die druckgesteuerten Austrittsöffnungen für ein Weiterströmen des Gases aus der ersten Kammer in die zweite Kammer des Gassackes freigegeben werden.

Gemäß einer bevorzugten Ausführungsform der Erfindung ist eine Kombination aus mindestens einer permanent offenen Austrittsöffnung und mindestens einer druckgesteuerten Austrittsöffnung vorgesehen, wobei die mindestens eine permanent offene Austrittsöffnung insbesondere zum Entlüften der ersten Kammer des Gassackes in einem Fall dient, in dem im Wesentlichen ausschließlich diese Kammer zum Schutz einer vergleichsweise kleinen bzw. leichten Person aufgeblasen wird, und die druckgesteuerte Gasaustrittsöffnung zusätzlich freigelegt wird, wenn durch die Gaseintrittsöffnung eine größere Menge Gas in die erste Kammer des Gassackes einströmt, die für das Befüllen beider Kammern des Gassackes vorgesehen ist. In diesem Fall erreicht der Druck in der ersten Kammer des Gassackes so große Werte, dass die mindestens eine druckgesteuerte Austrittsöffnung geöffnet wird und dadurch ein größerer Austrittsquerschnitt für die Weiterleitung von Gasen aus der ersten Kammer in die ebenfalls aufzublasende zweite Kammer des Gassackes zur Verfügung steht.

Die druckgesteuerte Austrittsöffnung kann beispielsweise dadurch gebildet werden, dass eine Austrittsöffnung von einer Lasche überdeckt ist, die beim Überschreiten eines vorgebbaren Druckes in der ersten Kammer des Gassackes die Austrittsöffnung freigibt, z. B. durch Reißen der Lasche an einem Schwächungsbereich.

Gemäß einer Ausführungsform der Erfindung ist die zur Überdeckung der druckgesteuerten Austrittsöffnung vorgesehene Lasche einstückig mit einer Lage des Gassackes ausgebildet und weist einen durch eine Perforation oder dergl. gebildeten Schwächungsbereich auf.

Gemäß einer anderen Ausführungsform der Erfindung wird die Lasche durch ein separates, mit mindestens einer Lage des Gassackes, insbesondere dessen Zwischenlage, verbundenes Verschlusselement gebildet, wobei der Schwächungsbereich bevorzugt an den Befestigungsstellen zwischen der Lasche und jener Lage des Gassackes gebildet ist. Hierbei kann es sich beispielsweise um Reißnähte oder um ein zerstörbares Verbindungsstück handeln.

Darüber hinaus sind in dem Gassack bevorzugt Abströmöffnungen vorgesehen, durch die hindurch Gas aus der ersten Kammer und/oder der zweiten Kammer in die Umgebung des Gassackes strömen kann, um den Gassack nach einem Befüllen zum Schutz eines Fahrzeuginsassen entlüften zu können. Hierbei können aufgrund der erfindungsgemäßen Anordnung der Zwischenlage des Gassackes, die die erste Kammer von der zweiten Kammer trennt, sowohl die zur Entlüftung der ersten Kammer des Gassackes als auch die zur Entlüftung der zweiten Kammer des Gassackes in die Umgebung dienenden Abströmöffnungen in der unteren Gassacklage vorgesehen sein, wobei die jeweilige Abströmöffnung wahlweise durch eine permanent geöffnete oder eine druckgesteuerte Abströmöffnung gebildet wird.

Ein Airbagmodul mit einem erfindungsgemäßen Gassack ist durch die Merkmale des Patentanspruchs 34 charakterisiert.

Ein Verfahren zum Aufblasen des Gassackes ist im Patentanspruch 36 angegeben.

Weitere Einzelheiten und Vorteile der Erfindung werden bei der nachfolgenden Beschreibung von Ausführungsbeispielen anhand der Figuren deutlich werden.

Es zeigen:
- Figur 1a: einen Querschnitt durch eine erste Ausführungsform eines Gassackes für ein Airbagmodul, der durch eine Unterplatte, eine hiermit verbundene Oberplatte sowie eine Zwischenplatte zur Teilung des Innenraumes des Gassackes in zwei Kammern gebildet wird, im befüllten Zustand;
- Figur 1b: eine Draufsicht auf Unterplatte und Zwischenplatte des Gassackes aus Figur 1a;
- Figur 2a: eine Weiterbildung des Gassackes aus den Figuren 1a und 1b im Querschnitt;
- Figur 2b: eine Ansicht der Unterplatte und Zwischenplatte des Gassackes aus Figur 2a;
- Figuren 3a bis 3c: drei unterschiedliche Ausführungsformen einer Reißlasche zur Verwendung bei dem in den Figuren 2a und 2b dargestellten Gassack;
- Figur 4a: eine Draufsicht auf Unterplatte und Zwischenplatte einer Abwandlung des Gassackes aus Figur 1 a;
- Figur 4b: einen Ausschnitt der Zwischenplatte aus Figur 4a.

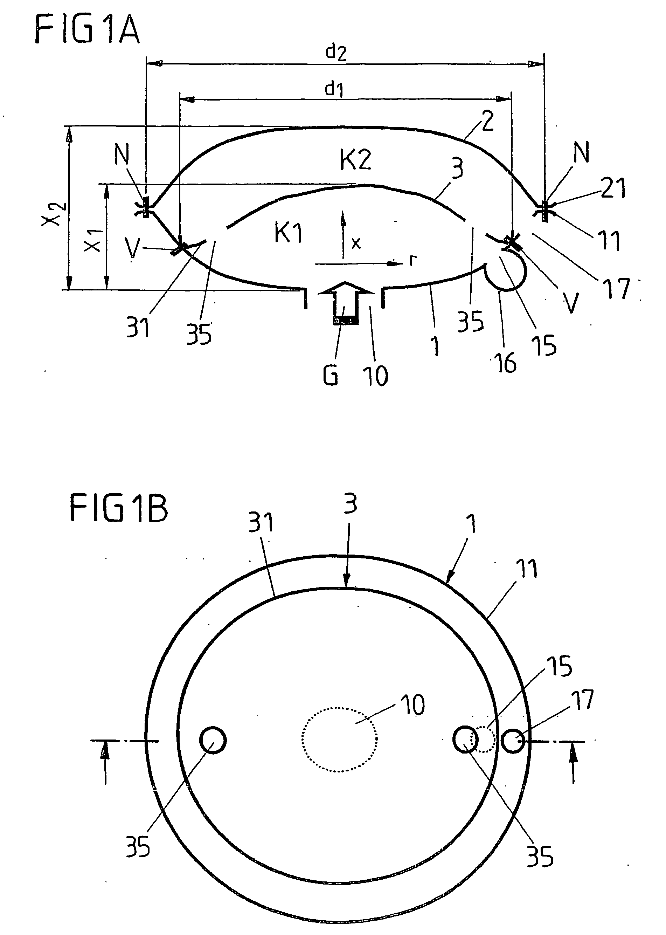

In den Figuren 1a und 1b ist ein Gassack für ein Airbagmodul eines Kraftfahrzeugs dargestellt, dessen äußere Hülle durch eine als Unterplatte 1 bezeichnete erste Gewebelage und eine hiermit verbundene, als Oberplatte 2 bezeichnete zweite Gewebelage gebildet wird, die jeweils im Wesentlichen kreisförmig ausgebildet und entlang ihres äußeren Randes 11, 21 durch eine Naht N miteinander verbunden sind. Ein derartiger Gassack eignet sich insbesondere zur Verwendung in einem am Lenkrad eines Kraftfahrzeugs anzuordnenden Fahrer-Airbagmodul.

Als Oberplatte 2 wird dabei diejenige Gewebelage des Gassackes bezeichnet, die nach Aufblasen des Gassackes dem zu schützenden Fahrzeuginsassen zugewandt ist, wohingegen als Unterplatte 1 diejenige Gewebelage bezeichnet wird, die der Aufblaseinrichtung zugeordnet ist und die eine Gasaustrittsöffnung 10 aufweist, durch die hindurch aus der Aufblaseinrichtung stammende Gase G in den Gassack eintreten können.

Das Innere des in Figur 1a im aufgeblasenen Zustand dargestellten Gassackes ist durch eine im Ausführungsbeispiel als Zwischenplatte 3 bezeichnete dritte Gewebelage in zwei Kammern K1, K2 unterteilt. Die ebenfalls im Wesentlichen kreisförmig ausgebildete, randseitig von einem Kreisbogen begrenzte Zwischenplatte 3 ist hierzu entlang ihres äußeren Randes 31 an durch eine Naht gebildeten Verbindungsstellen V mit der Unterplatte 1 befestigt, und zwar in der Weise, dass die Verbindungsstellen V, über die die Zwischenplatte 3 an der Unterplatte 1 befestigt ist, von den durch Nähte N gebildeten Verbindungsstellen zwischen Unterplatte 1 und Oberplatte 2 räumlich beabstandet sind, und zwar in Richtung auf eine in der Unterplatte 1 zentral angeordnete Gaseintrittsöffnung 10, durch die hindurch Gase G in das Innere des Gassackes strömen können.

Der Teil der Unterplatte 1, der die zweite Kammer K2 des Gassackes zusammen mit der Oberplatte 2 und der Zwischenplatte 3 begrenzt, liegt dabei zwischen den Verbindungsstellen N, über die die Unterplatte 1 und die Oberplatte 2 miteinander verbunden sind, und den Verbindungsstellen V, über die die Unterplatte 1 und die Zwischenplatte 3 miteinander verbunden sind.

Die Zwischenplatte 3 weist bevorzugt eine solche Größe auf und ist derart an der Unterplatte 1 festgelegt, dass das Volumen der ersten Kammer K1 des Gassackes, die von der Unterplatte 1 und der Zwischenplatte 3 begrenzt wird, zu dem Volumen der zweiten Kammer K2, die von der Oberplatte 2, der Zwischenplatte 3 sowie einem Teil der Unterplatte 1 begrenzt wird, ein Volumenverhältnis zwischen 3:2 und 3:1 bildet. Das Volumen der ersten Kammer K1 ist also bevorzugt größer als das Volumen der zweiten Kammer K2, und zwar insbesondere um das Anderthalbfache bis Dreifache.

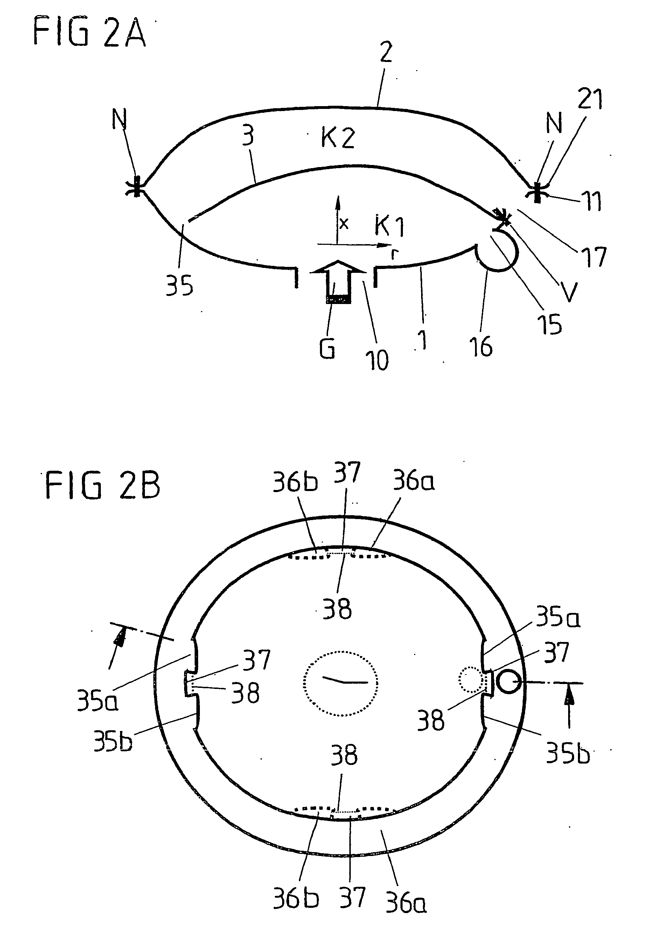

Die beiden Kammern K1, K2 des Gassackes stehen über mehrere, z. B. zwei, in der Zwischenplatte 3 vorgesehene Austrittsöffnungen 35 miteinander in Verbindung. Diese sind im Ausführungsbeispiel, soweit in den Figuren 1a und 1b erkennbar, der Einfachheit halber als permanent offene Austrittsöffnungen 35 ausgebildet; bevorzugt ist jedoch zumindest ein Teil der in der Zwischenplatte 3 vorgesehenen Austrittsöffnungen druckgesteuert, wie nachfolgend anhand der Figuren 2a und 2b näher erläutert werden wird.

Weiterhin sind Abströmöffnungen 15, 17 in der Hülle des Gassackes vorgesehen, über die die erste Kammer K1 bzw. die zweite Kammer K2 des Gassackes mit der Umgebung in Verbindung stehen, so dass aus der jeweiligen Kammer K1, K2 des Gassackes Gas in die Umgebung entweichen kann.

Vorliegend ist sowohl diejenige Abströmöffnung 15, über die die erste Kammer K1 mit der Umgebung des Gassackes in Verbindung steht, als auch die Abströmöffnung 17, über die die zweite Kammer K2 des Gassackes mit der Umgebung in Verbindung steht, jeweils in der Unterplatte 1 vorgesehen. Die erstgenannte Abströmöffnung 15 befindet sich dabei in dem Bereich der Unterplatte 1, der die erste Kammer K1 begrenzt, und die zweitgenannte Abströmöffnung 17 befindet sich in dem Bereich der Unterplatte 1, der die zweite Kammer K2 begrenzt.

Dabei ist die der ersten Kammer K1 zugeordnete Abströmöffnung 15 als eine druckgesteuerte Abströmöffnung ausgebildet, die erst freigegeben wird, wenn der Druck in der ersten Kammer K1 einen gewissen Mindestwert (Schwellwert) erreicht hat. Hierzu kann die besagte Abströmöffnung 15 mit einer Membran 16 oder mit einem mit einer Reißnaht versehenen Verschlusselement überdeckt sein, so dass sie bei Erreichen bzw. Überschreiten eines Mindestwertes des Innendruckes in der ersten Kammer K1 - durch Zerstörung der Membran bzw. der Reißnaht - freigegeben wird.

Die der zweiten Kammer K2 zugeordnete Abströmöffnung 17 ist hier als eine permanent offene Abströmöffnung in der Unterplatte 1 des Gassackes ausgebildet, die auch in der Oberplatte 2 des Gassackes vorgesehen sein könnte. Entscheidend ist, dass diese Abströmöffnung 17 in einem Bereich 1, 2 der die zweite Kammer K2 begrenzenden Platten 1, 2, 3 des Gassackes vorgesehen ist, in dem die zweite Kammer K2 zum Außenraum hin (und nicht zur ersten Kammer K1 hin) begrenzt wird. Sie liegt bevorzugt in der Nähe der Verbindungsstellen N in Form von Nähten, über die die Oberplatte 2 und die Unterplatte 1 miteinander verbunden sind.

Je nach den Bedingungen, die beim Einsatz des anhand der Figuren 1a und 1b dargestellten Gassackes in einem konkreten Airbagmodul sowie einer konkreten Fahrzeugumgebung herrschen, kann wahlweise jeder der beiden Kammern K1, K2 des Gassackes eine zum Außenraum hin weisende Abströmöffnung zugeordnet sein (wie im Ausführungsbeispiel dargestellt) oder nur einer der beiden Kammern K1, K2. Außerdem kann im Einzelfall festgelegt werden, ob die der jeweiligen Kammer K1, K2 zugeordnete, zur Entlüftung in die Umgebung dienende Abströmöffnung 15, 17 als permanent offene oder als druckgesteuerte Abströmöffnung ausgebildet wird. Es kann also etwa auch - im Gegensatz zu dem anhand der Figuren 1a und 1b dargestellten Ausführungsbeispiel - der ersten Kammer K1 eine permanent offene und der zweiten Kammer K2 eine druckgesteuerte Abströmöffnung zugeordnet sein, oder gegebenenfalls auch beiden Kammern eine permanent offene oder beiden Kammern eine druckgesteuerte Abströmöffnung.

Ein Gassack der anhand der Figuren 1a und 1b dargestellten Art ist geeignet zum optimal angepassten Schutz von Fahrzeuginsassen stark unterschiedlicher Größe, indem zum Schutz besonders kleiner bzw. besonders leichter Fahrzeuginsassen (5%-Frau) lediglich die erste Kammer K1 des Gassackes 1 in einem Crash-Fall aufgeblasen wird, während zum Schutz größerer Fahrzeuginsassen (z. B. 50%-Mann bzw. 95%-Mann) beide Kammern K1 und K2 des Gassackes in einem Crash-Fall mit Gas befüllt werden. Hierzu ist der Gassack über seine Gaseintrittsöffnung 10 beispielsweise mit einem zweistufigen Gasgenerator als Aufblaseinrichtung gekoppelt, von dem lediglich die erste Stufe gezündet wird, wenn nur die erste Kammer K1 des Gassackes mit Gas befüllt werden soll, und von dem beide Stufen gezündet werden, wenn beide Kammern K1 und K2 des Gassackes aufgeblasen werden sollen. Dementsprechend wird im zweitgenannten Fall durch die beiden Stufen des Gasgenerators eine größere Menge an Gas zum Aufblasen des Gassackes zur Verfügung gestellt als im erstgenannten Fall durch nur eine Stufe des Gasgenerators. Die Steuerung des Gasgenerators erfolgt dabei in Abhängigkeit von der Größe und/oder dem Gewicht des zu schützenden Fahrzeuginsassen, also beispielsweise des Fahrers eines Kraftfahrzeuges, die mittels bekannter Positions- und Gewichtssensoren ermittelbar ist.

In Abwandlung des beschriebenen Ausführungsbeispiels können auch mehr als zwei Kammern in einem Gassack vorgesehen sein, von denen in Abhängigkeit von dem Gewicht und/oder der Größe sowie der aktuellen Sitzposition eines zu schützenden Fahrzeuginsassen jeweils ein bestimmter Teil mit Gas befüllt wird. In diesem Fall ist dem Gassack ein mehrstufiger Gasgenerator zugeordnet, bei dem die Anzahl der Stufen vorteilhaft der Anzahl unterschiedlicher Kammern des Gassackes entspricht.

Nachfolgend wird das Aufblasverhalten des in den Figuren 1a und 1b dargestellten Gassackes, also beispielhaft eines Gassackes mit zwei Kammern zum Schutz von Fahrzeuginsassen unterschiedlicher Größe, beschrieben werden.

Hierbei wird zunächst ausgegangen von einem Crash-Fall, bei dem ein Fahrzeuginsasse durch einen Gassack der anhand Figur 1a und 1b dargestellten Art vor Verletzungen geschützt werden soll, der von einer zugeordneten Sensoreinrichtung als besonders kleine bzw. leichte Person identifiziert worden ist, so dass im Crash-Fall lediglich die erste Stufe eines zugeordneten Gasgenerators gezündet wird und Gase G erzeugt, welche durch die Abgaseintrittsöffnung 10 des Gassackes 1 in dessen erste Kammer K1 eintreten. Der sich hierbei in der ersten Kammer K1 des Gassackes einstellende Innendruck sowie die zum Aufblasen der ersten Kammer K1 benötigte Aufblaszeit werden dabei einerseits durch die Eigenschaften des zur Gaserzeugung verwendeten Gasgenerators und andererseits durch die Größe der in der Zwischenplatte 3 vorgesehenen Austrittsöffnungen 35 bestimmt.

Die der ersten Kammer K1 weiterhin zugeordnete druckgesteuerte Abströmöffnung 15 in der Unterplatte 1 ist demgegenüber so ausgelegt, dass sie beim Aufblasen der ersten Kammer K1 des Gassackes noch nicht geöffnet wird.

Trifft der zu schützende Insasse schließlich auf dem Gassack auf, dessen erste Kammer K1 mittels der durch die Gaseintrittsöffnung 10 eintretenden Gase G aufgeblasen worden ist, so erfolgt der Energieabbau durch einen mit der Verdrängung der in der ersten Kammer K1 befindlichen Gase einhergehenden Druckabbau. Hierbei werden zum einen durch die Austrittsöffnungen 35 in der Zwischenplatte 3 Gase in die zweite Kammer K2 des Gassackes verdrängt, von wo aus sie durch die der zweiten Kammer K2 zugeordnete Abströmöffnung 17 in die Umgebung gelangen können. Darüber hinaus können durch die der ersten Kammer K1 zugeordnete druckgesteuerte Abströmöffnung 15 hindurch Gase unmittelbar aus der ersten Kammer K1 in die Umgebung entweichen, nachdem die mit dem Auftreffen eines Fahrzeuginsassen - also einer mit großer Geschwindigkeit auftreffenden leichten Person - verbundene Druckerhöhung in der ersten Kammer K1 des Gassackes zu einer Zerstörung bzw. einem Abreißen des Verschlusselementes 16 der besagten Abströmöffnung 15 geführt hat.

Alternativ kann jedoch die der ersten Kammer K1 zugeordnete druckgesteuerte Abströmöffnung 15 auch so ausgelegt sein, dass sie auch bei der mit dem Auftreffen des zu schützenden Fahrzeuginsassen stattfindenden Druckerhöhung in der ersten Kammer K1 noch verschlossen bleibt und erst durch Zerstören bzw. Abreißen des Verschlusselementes 16 geöffnet wird, wenn zum Schutz einer entsprechend größeren und schwereren Person beide Stufen des Gasgenerators zum Aufblasen des Gassackes gezündet worden sind und die entsprechend große und schwere Person auf den Gassack aufgetroffen ist, mit der Folge einer entsprechenden Druckerhöhung im Gassack.

Wird der Gassack zum Schutz einer derartigen größeren und schwereren Person in einem Crash-Fall aktiviert, so werden beide Generatorstufen gezündet, da nun beide Kammern K1 und K2 des Gassackes und somit ein entsprechend größeres Volumen des Gesamtsystems für den Energieabbau beim Auftreffen des Fahrzeuginsassen auf den Gassack zur Verfügung stehen soll. Das Befüllen der zweiten Kammer K2 des Gassackes erfolgt dabei, indem die durch die Gaseintrittsöffnung 10 zunächst in die erste Kammer K1 eintretenden Gase durch die permanent geöffneten Austrittsöffnungen 35 der Zwischenplatte 3 hindurch in die zweite Kammer K2 strömen. Der sich dabei in den beiden Kammern K1, K2 einstellende Innendruck sowie die Aufblaszeit werden auch hier durch die Größe der Austrittsöffnungen 35 in der Zwischenplatte 3 mitbestimmt, die bevorzugt zumindest teilweise druckgesteuert sein können.

Die der ersten Kammer K1 zugeordnete druckgesteuerte Abströmöffnung 15 ist dabei bevorzugt so ausgelegt, dass sie durch den beim Aufblasen des Gassackes in den beiden Kammern K1, K2 entstehenden Innendruck zunächst nicht geöffnet wird.

Beim Auftreffen des zu schützenden Fahrzeuginsassen auf den in beiden Kammern K1, K2 aufgeblasenen Gassack erfolgt der Energieabbau durch den mit der Verdrängung der Gase aus beiden Kammern K1, K2 verbundene Druckabbau. Dies erfolgt zum einen durch die druckgesteuerte Abströmöffnung 15 der ersten Kammer K1 hindurch, die durch die beim Auftreffen des zu schützenden Fahrzeuginsassen auf den Gassack auftretende Druckerhöhung geöffnet wird und durch die hindurch sowohl die Gase aus der ersten Kammer K1 unmittelbar als auch die Gase aus der zweiten Kammer K2 mittelbar (nach einem Rückströmen durch die Austrittsöffnungen 35 in die erste Kammer K1) austreten können. Zusätzlich können Gase auch direkt aus der zweiten Kammer K2 in die Umgebung austreten, wenn dort, wie in den Figuren 1a und 1b dargestellt, eine weitere Austrittsöffnung 17 vorgesehen ist.

Anhand Figur 1a wird dabei deutlich, dass die aufgeblasene erste Kammer K1 sowohl in der Richtung x, entlang der sich der Gassack in Richtung auf den zu schützenden Insassen entfaltet, eine deutlich geringere Ausdehnung x₁ aufweist als der insgesamt aufgeblasene Gassack mit seiner entsprechenden Ausdehnung x₂, als auch in radialer Richtung r, also senkrecht zur Hauptentfaltungsrichtung des Gassackes, eine kleinere Ausdehnung d₁ aufweist als der insgesamt aufgeblasene Gassack mit seiner radialen Ausdehnung d₂. Dies wird dadurch erreicht, dass die die Zwischenplatte 3 bildende dritte Gewebelage ausschließlich an der die Unterplatte 1 bildenden ersten Gewebelage befestigt ist, und zwar von den Verbindungsstellen N zwischen Unterplatte 1 und Oberplatte 2 beabstandet.

In den Figuren 2a und 2b ist eine Weiterbildung des Ausführungsbeispieles aus den Figuren 1a und 1b dargestellt, wobei der Unterschied in der Ausbildung der Austrittsöffnungen in der Zwischenplatte 3 besteht, über die die erste Kammer K1 und die zweite Kammer K2 miteinander in Strömungsverbindung stehen.

Bei dem in den Figuren 1a und 1b dargestellten Ausführungsbeispiel ist der Querschnitt der in der Zwischenplatte 3 vorgesehenen Austrittsöffnungen 35 so zu wählen, dass sie einerseits im Fall eines Aufblasens lediglich der ersten Kammer K1 zum Schutz einer kleinen, leichten Person zur Entlüftung der ersten Kammer K1 in die zweite Kammer K2 hinein dienen und gleichzeitig im Fall eines Aufblasens beider Kammern K1, K2 des Gassackes zum Schutz einer entsprechend größeren, schwereren Person den Durchtritt der Gase aus der ersten Kammer K1 in die zweite Kammer K2 zum gleichzeitigen Aufblasen beider Gase ermöglichen. In beiden Fällen sollen dabei vergleichbare Innendrücke und Aufblaszeiten erreicht werden, wobei im erstgenannten Fall lediglich die erste Kammer K1 und im zweitgenannten Fall beide Kammern K1, K2 betroffen sind. Um hierzu den Querschnitt der Austrittsöffnungen selektiv anpassen zu können, je nachdem, ob lediglich die erste Kammer K1 oder beide Kammern K1 und K2 des Gassackes aufgeblasen werden sollen, sind die Austrittsöffnungen bei dem in den Figuren 2a und 2b dargestellten Ausführungsbeispiel teilweise druckgesteuert.

Da die in den Figuren 2a und 2b dargestellte Anordnung sich von der in den Figuren 1a und 1b gezeigten lediglich in der Ausführung der Austrittsöffnungen in der Zwischenplatte 3 des Gassackes unterscheidet, wird nachfolgend auch lediglich auf die Ausbildung dieser Austrittsöffnungen und ihre Funktion eingegangen. Im Übrigen wird auf die Erläuterungen zu den Figuren 1a und 1b Bezug genommen, wobei zur leichteren Erkennbarkeit des Zusammenhanges für übereinstimmende Bauteile und Baugruppen in den Figuren 1a und 1b einerseits sowie den Figuren 2a und 2b andererseits identische Bezugszeichen verwendet werden. So können (druckgesteuerte) Austrittsöffnungen der in den Figuren 2a und 2b dargestellten Art vorteilhaft auch bei dem Ausführungsbeispiel gemäß den Figuren 1a und 1b vorgesehen sein.

Gemäß den Figuren 2a und 2b weist die Zwischenplatte 3 entlang ihres Randes (in Umfangsrichtung gleichmäßig, wie dargestellt, oder ungleichmäßig verteilt) mehrere Austrittsöffnungen 35a, 35b; 36a, 36b auf, die jeweils teilweise durch eine Lasche 37 überdeckt und hierdurch in zwei Teilöffnungen 35a und 35b bzw. 36a und 36b unterteilt sind. Durch die Art der Anordnung der Austrittsöffnungen 35a, 35b; 36a, 36b entlang des Randes der Zwischenplatte 3 kann dabei das seitliche Aufblasverhalten des Gassackes beim Entfalten gesteuert werden. Um dies zu verdeutlichen, ist in Figur 2b ein Teil der Austrittsöffnungen (36a, 36b) als fakultative Austrittsöffnungen gestrichelt dargestellt.

Die der jeweiligen Austrittsöffnung 35a, 35b; 36a, 36b zugeordnete Reißlasche 37 ist dabei vorliegend einstückig an der Zwischenplatte 3 angeformt und über einen Aufreißbereich 38 mit der Unterplatte 1 verbunden, der bei einem bestimmten, vorgebbaren Druck aufreißt, so dass sich die jeweilige Austrittsöffnung 35a, 35b; 36a, 36b entsprechend vergrößert, also einen größeren Strömungsquerschnitt aufweist.

Abweichend von dem in den Figuren 2a und 2b dargestellten Ausführungsbeispiel können in der Zwischenplatte 3 auch separate permanent offene Austrittsöffnungen einerseits und druckgesteuerte Austrittsöffnungen andererseits vorgesehen sein, etwa zum einen permanente Austrittsöffnungen 35 der in den Figuren 1a und 1b dargestellten Art sowie zum anderen separate druckgesteuerte Austrittsöffnungen 15 der ebenfalls in den Figuren 1a und 1b dargestellten Art. Von Bedeutung ist allein, dass eine Steuerung der zwischen der ersten Kammer K1 und der zweiten Kammer K2 liegenden Austrittsöffnungen in der Weise ermöglicht wird, dass der Strömungsquerschnitt für die von der ersten Kammer K1 in die zweite Kammer K2 strömenden Gase in Abhängigkeit davon verändert werden kann, ob ein Entlüften der zum Schutz einer leichten Person aufgeblasenen Kammer K1 in die zweite Kammer K2 erfolgen soll oder ob die aus der ersten Kammer K1 in die zweite Kammer K2 austretenden Gase ein gleichmäßiges Aufblasen beider Kammern K1, K2 zum Schutz eines entsprechend großen, schweren Fahrzeuginsassen ermöglichen sollen.

Wird bei der in den Figuren 2a und 2b dargestellten Gassackanordnung zum Schutz einer kleinen, leichten Person lediglich die erste Kammer K1 des Gassackes aufgeblasen, wie oben anhand der Figuren 1a und 1b beschrieben, so erfolgt hier eine Entlüftung der ersten Kammer K1 zum Druckabbau lediglich durch die Teilöffnungen 35a, 35b und ggf. 36a, 36b der Austrittsöffnungen hindurch, die im Übrigen noch teilweise durch die jeweilige Lasche 37 verschlossen sind.

Werden demgegenüber zum Schutz einer entsprechend größeren, schwereren Person unter Zündung beider Stufen eines zugeordneten Gasgenerators beide Kammern K1, K2 des Gassackes aufgeblasen, so werden infolge des erhöhten Innendruckes in der ersten Kammer K1, in die nun durch die Gaseintrittsöffnung 10 aus beiden Stufen des Gasgenerators stammende Gase G einströmen, die der jeweiligen Austrittsöffnung 35a, 35b; 36a, 36b zugeordneten Laschen 37 von der Unterplatte 1 abgerissen, so dass in den Austrittsöffnungen 35a, 35b; 36a, 36b ein entsprechend größerer Strömungsquerschnitt für das Weiterströmen der Gase aus der ersten Kammer K1 in die zweite Kammer K2 mit dem Ziel eines möglichst gleichmäßigen Aufblasens beider Kammern K1, K2 zur Verfügung steht.

Im Ergebnis kann also bei dem anhand der Figuren 2a und 2b dargestellten Ausführungsbeispiel der Strömungsquerschnitt der Austrittsöffnungen, über die die erste Kammer K1 mit der zweiten Kammer K2 in Strömungsverbindung steht, gezielt dahingehend eingestellt und unterschieden werden, ob die Austrittsöffnungen zum Entlüften der ersten Kammer K1 dienen sollen oder ein gleichmäßiges Befüllen der ersten Kammer K1 und zweiten Kammer K2 des Gassackes bewirken sollen.

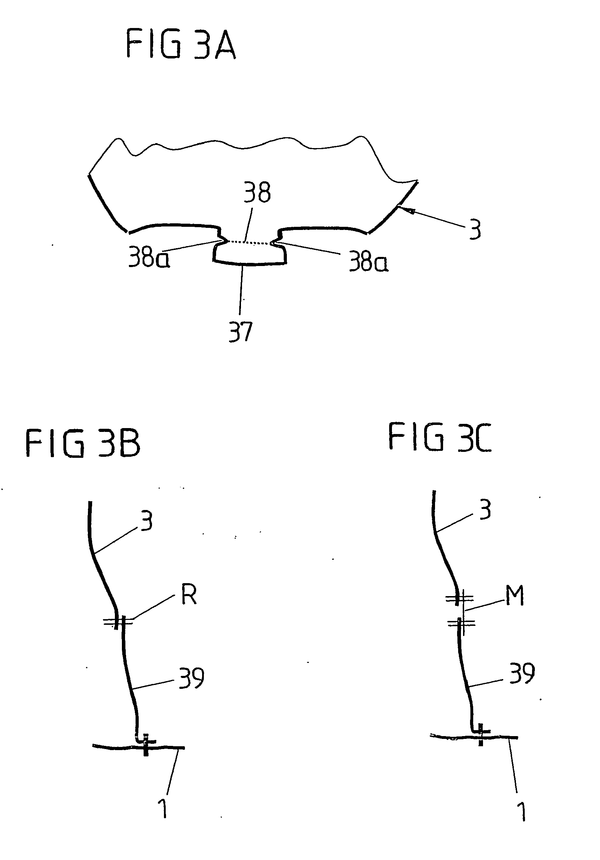

In Figur 3a ist die in den Figuren 2a und 2b dargestellte Lasche 37, mit der die Austrittsöffnungen der Unterplatte 3 teilweise überdeckt und damit verschlossen sind, vergrößert dargestellt. Dabei wird insbesondere deutlich, dass der Aufreißbereich 38 der jeweiligen Lasche 37 durch seitliche Einkerbungen bzw. Einschnitte (Perforationen) vordefiniert ist.

Figur 3b zeigt ein Ausführungsbeispiel einer zum (teilweisen) Verschließen einer Austrittsöffnung der Zwischenplatte 3 vorgesehenen Lasche 39, die einerseits fest mit der Unterplatte 1 des Gassackes verbunden ist und andererseits über eine Reißnaht R mit dessen Zwischenplatte 3 in Verbindung steht. Diese Reißnaht R ist so gestaltet, dass sie unter der Wirkung des Innendruckes in der ersten Kammer K1 (vergl. Figuren 1a und 2a) des Gassackes aufreißt, wenn dieser mit einer größeren Menge Gas, entsprechend einer Zündung beider Stufen des Gasgenerators, befüllt wird.

Figur 3c zeigt schließlich eine Abwandlung der Anordnung aus Figur 3b, bei der die Lasche 39 mit der Zwischenplatte 3 über ein aufreißbares Material M, z. B. eine aufreißbare Membran oder eine aufgeklebte Silikonlage, verbunden ist.

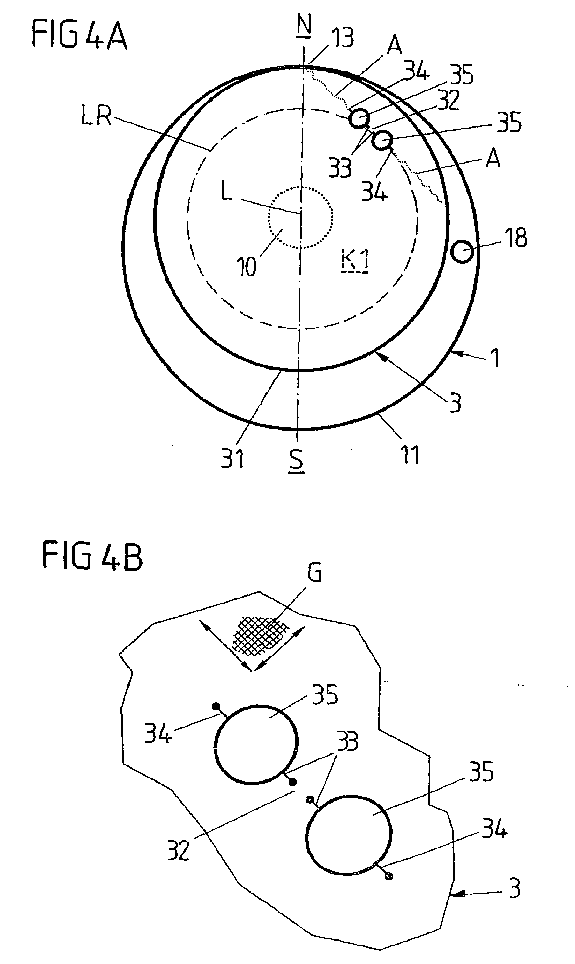

In den Figuren 4a und 4b ist eine Abwandlung der Ausführungsbeispiele aus den Figuren 1a und 1b sowie 2a und 2b dargestellt, wobei ein Unterschied darin besteht, dass gemäß Figur 4a die Unterplatte 1 und die Zwischenplatte 3 nicht kreisförmig, sondern jeweils leicht oval ausgebildet sind. Dabei ist die Gassackanordnung als Bestandteil eines Fahrer-Airbagmodules derart an einem zugeordneten Lenkrad zu platzieren, dass die Gassackanordnung 1, 3 ihre größte Längserstreckung zwischen der 12-Uhr-Position N (Nord) und der 6-Uhr-Position S (Süd) des Lenkrades aufweist, wobei die 6-Uhr-Position des Lenkrades bzw. des schematisch angedeuteten Lenkradkranzes LR einerseits und die 12-Uhr-Position des Lenkrades bzw. Lenkradkranzes LR andererseits so definiert sind, dass bei Geradeausfahrt eines Kraftfahrzeuges die Verbindungslinie L der 6-Uhr-Position S mit der 12-Uhr-Position N in Fahrtrichtung weist, und wobei weiterhin bei Geradeausfahrt die 12-Uhr-Position des Lenkradkranzes LR der Windschutzscheibe eines Kraftfahrzeugs und die 6-Uhr-Position des Lenkradkranzes LR dem Fahrzeuginnenraum zugewandt ist.

Hierbei ist die Zwischenplatte 3 bezüglich der Unterplatte 1 derart in Richtung auf die 12-Uhr-Position N versetzt angeordnet, dass der umlaufende äußere Rand 11 der Unterplatte 1 und der umlaufende äußere Rand 31 der Zwischenplatte 3 einander im Bereich 13 der 12-Uhr-Position berühren. Dies ermöglicht gemäß einer bevorzugten Ausführungsform eine einteilige Ausbildung der Unterplatte 1 und der Gewebeplatte 3, d. h., deren Ausbildung beispielsweise als ein einstückiges Gewebeteil, wobei jene einteilige Verbindung der Unterplatte 1 und der Zwischenplatte 3 bevorzugt lediglich im Bereich 13 der 12-Uhr-Position N erfolgt. Außerhalb jenes Bereiches 13 ist die Zwischenplatte 3 entlang ihres umlaufenden äußeren Randes 31 durch geeignete Verbindungsmittel, z. B. in Form von Nähten, mit der Unterplatte 1 verbunden.

Entsprechend der versetzten Anordnung der Zwischenplatte 3 bezüglich der Unterplatte 1 ist bei dem in den Figuren 4a und 4b dargestellten Ausführungsbeispiel die von der Unterplatte 1 und der Zwischenplatte 3 begrenzte erste Kammer K1 (vergleiche auch Figuren 1a und 2a) ebenfalls zur 12-Uhr-Position N hin versetzt angeordnet.

Die Gaseintrittsöffnung 10 ist wiederum derart an der Unterplatte 1 ausgebildet, dass sie - in einer Draufsicht auf die Unterplatte 1 und Zwischenplatte 3 entsprechend Figur 4a betrachtet - im Zentrum der Zwischenplatte 3 liegt und dabei gleichzeitig konzentrisch zur Nabe des zugehörigen Lenkrades bzw. konzentrisch zu dessen Lenkradkranz LR angeordnet ist. Dadurch wird im unteren, der 6-Uhr-Position S gelegenen Gassackbereich im aufgeblasenen Zustand ein vergrößertes Gassackvolumen, insbesondere zwischen Lenkradkranz LR und dem Abdomenbereich eines zu schützenden Fahrzeuginsassen, bereitgestellt und somit die Insassenrückhaltung verbessert.

Gemäß den Figuren 4a und 4b weist die Zwischenplatte 3 zwei permanent offene Austrittsöffnungen 35 auf, die asymmetrisch bezüglich der Verbindungslinie L zwischen der 12-Uhr-Position N und der 6-Uhr-Position S des zugeordneten Lenkrades angeordnet sind, und zwar beide auf derselben Seite der Verbindungslinie L und hierbei etwas vom äußeren Rand 31 der Zwischenplatte 3 beabstandet.

Durch diese asymmetrische, bezogen auf die Verbindungslinie L außermittige Anordnung der permanent offenen Austrittsöffnungen 35 soll verhindert werden, dass diese beim Auftreffen eines kleinen Insassen auf die Gassackanordnung (wobei die Austrittsöffnungen 35 das Abströmen von Gas aus der ersten Kammer K1 in die in Figur 4a nicht dargestellte zweite Kammer K2, vergleiche Figuren 1a und 2a, ermöglichen sollen) verschlossen werden.

Zusätzlich weist die Zwischenplatte 3 eine druckgesteuerte Austrittsöffnung auf, die einerseits durch zwei Schlitze 33 definiert ist, die sich von den beiden permanent geöffneten Austrittsöffnungen 35 ausgehend aufeinander zu erstrecken und die im Bereich zwischen den beiden Schlitzen 33 eine Lasche 32 als Verschlusselement definieren. Zusätzlich geht von den beiden permanent geöffneten Austrittsöffnungen jeweils ein Schlitz 34 nach außen, in einer Richtung weg von der jeweils anderen, gegenüberliegenden Austrittsöffnung, ab. Anhand der ausschnitthaften Darstellung der Zwischenplatte 3 in der Umgebung der permanent offenen Austrittsöffnungen 35 in Figur 4b wird dabei deutlich, dass sich die Schlitze 33, 34, bei denen es sich insbesondere um Einschnitte handeln kann, jeweils in Verlaufsrichtung von Fäden des die Zwischenplatte 3 bildenden Gewebes G erstrecken, nämlich in Kett- oder Schussrichtung des Gewebes.

Weiterhin ist gemäß Figur 4a in der Unterplatte 1 eine druckgesteuerte Abströmöffnung 18 vorgesehen, durch die hindurch Gas aus der in den Figuren 4a und 4b nicht mit dargestellten zweiten Kammer K2 (vergleiche Figuren 1a und 2a) in die Umgebung abströmen kann. Diese Abströmöffnung 18 ist bevorzugt nach Art der druckgesteuerten Abströmöffnung 15 aus den Figuren 1a und 2a mit einer Membran verschlossen, die erst bei Erreichen bzw. Überschreiten eines vorgebbaren Mindestdruckes in der zugeordneten Kammer zerstört wird und hierdurch die Abströmöffnung 18 freigibt. Alternativ kann die druckgesteuerte Abströmöffnung 18 dabei, wie im Fall der Ausführungsbeispiele gemäß den Figuren 1a, 1b und 2a, 2b, in einem Bereich der Unterplatte 1 vorgesehen sein, der an die erste Kammer K1 grenzt.

Wird die in den Figuren 4a und 4b dargestellte Gassackanordnung zum Schutz einer vergleichsweise kleinen bzw. leichten Person aktiviert, z. B. einer so genannten 5%-Frau, indem lediglich eine der beiden Stufen eines zugeordneten zweistufigen Gasgenerators gezündet wird, so wird zunächst nur die zwischen der Unterplatte 1 und der Zwischenplatte 3 gelegene erste Kammer K1 mit Gas gefüllt, da der mit der aus nur einer Generatorstufe stammenden Gasmenge in der ersten Kammer K1 aufgebaute Innendruck nicht ausreicht, um neben den permanent offenen Austrittsöffnungen 35 auch noch eine druckgesteuerte Austrittsöffnung in der Zwischenplatte 3 zu öffnen. Die Energie eines auf die mit einer aufgeblasenen ersten Kammer K1 bereitstehenden Gassackanordnung auftreffenden Fahrzeuginsassen wird dann, wie bereits oben anhand der Anordnung aus den Figuren 1a und 1b beschrieben, durch die Verdrängung der Gase aus der ersten Kammer K1 in die in Figur 4a nicht mit dargestellte zweite Kammer K2 abgebaut, wobei die Gase durch die permanent offenen Ausströmöffnungen 35 strömen.

Wird die in den Figuren 4a und 4b dargestellte Gassackanordnung demgegenüber zum Schutz eines größeren bzw. schwereren Fahrzeuginsassen, z. B. eines so genannten 50%-Mannes aufgeblasen, indem beide Stufen des zugeordneten Gasgenerators gezündet werden, so baut sich in der ersten Kammer K1 ein erheblich größerer Innendruck auf, der dazu führt, dass das Gewebe G der Zwischenplatte 3 von den Schlitzen 33, 34 ausgehend entlang der entsprechenden Gewebefäden aufreist. Hierdurch wird zum einen die zwischen den beiden permanenten Austrittsöffnungen 35 bzw. den hiervon abgehenden Schlitzen 33 gebildete Lasche 32 zerstört, so dass die beiden permanent offenen Austrittsöffnungen 35 zusammen mit dem dazwischen liegenden Bereich eine entsprechend größere Austrittsöffnung bilden. Weiterhin können die nach außen von den permanent offenen Austrittsöffnungen 35 abstehenden Schlitze 34 bei Anliegen eines entsprechenden Druckes bewirken, dass das Gewebe G entlang einer durch die Gewebefäden definierten Aufreißlinie A bis zum äußeren Rand 31 der Zwischenplatte 3 aufreißt. Hierdurch wird eine besonders große (druckgesteuerte) Austrittsöffnung zur Verfügung gestellt, die einerseits durch die besagte Aufreißlinie A und andererseits durch den äußeren Rand 31 der Zwischenplatte 3 begrenzt ist. (Die entstehende Austrittsöffnung ist um so größer je größer der Abstand der permanent offenen Austrittsöffnungen 35 von dem äußeren Rand 31 der Zwischenplatte 3 ist.) Dies ermöglicht ein besonders schnelles Einströmen der Gase-aus der ersten Kammer K1 in die (in Figur 4a nicht erkennbare) zweite Kammer K2 (vergleiche Figuren 1a und 2a), so dass ein großer Öffnungsquerschnitt für eine schnelle Befüllung des gesamten Gassackvolumens durch Überströmen der Gase aus der ersten Kammer K1 in die zweite Kammer zur Verfügung steht.

Aufgrund des großen Strömungsquerschnittes, über den die beiden Kammern der Gassackanordnung beim Ausführungsbeispiel gemäß Figur 4a im Fall der Bildung einer druckgesteuerten Öffnung in der Zwischenplatte 3 miteinander verbunden sind, kann das abschließende Abströmen der Gase aus beiden Kammern K1, K2 in die Umgebung, um Aufprallenergie abzubauen, wahlweise durch eine in der ersten Kammer K1 und/oder in der zweiten Kammer K2 vorgesehene Abströmöffnung 18 erfolgen.

## Patentansprüche

1. Gassack für ein Airbagmodul eines Kraftfahrzeugs, der in einem Crash-Fall zum Schutz eines Fahrzeuginsassen mit Gas befüllbar ist, mit
- einer oberen Gassacklage (2) und einer unteren Gassacklage (1), die zur Bildung eines Gassackes miteinander verbunden sind, wobei die obere Gassacklage (2) bei bestimmungsgemäßem Einbau des Gassackes in ein Airbagmodul im aufgeblasenen Zustand dem zu schützenden Fahrzeuginsassen zugewandt ist,
- einer zwischen der oberen Gassacklage (2) und der unteren Gassacklage (1) angeordneten Zwischenlage (3), die den von der oberen Gassacklage (2) und der unteren Gassacklage (1) umschlossenen Innenraum des Gassackes in zwei Kammern (K1, K2) unterteilt,
- einer Gaseintrittsöffnung (10), durch die hindurch aus einer Aufblaseinrichtung stammendes Gas in die von der unteren Gassacklage (1) und der Zwischenlage (3) gebildete erste Kammer (K1) des Gassackes gelangen kann, und
- Austrittsmitteln (33, 34; 35a, 35b; 36a, 36b), durch die Gas aus der ersten Kammer (K1) des Gassackes in die von der Zwischenlage (3) und der oberen Gassacklage (2) umschlossene zweite Kammer (K2) des Gassackes gelangen kann, so dass je nach der Menge des durch die Eintrittsöffnung in den Gassack eingeleiteten Gases wahlweise im Wesentlichen nur die erste Kammer (K1) oder beide Kammern (K1, K2) des Gassackes mit Gas befüllt werden, und die Austrittsmittel (33, 34; 35a, 35b; 36a, 36b) zumindest teilweise druckgesteuert sind, so dass der Gasaustritt von der ersten Kammer (K1) in die zweite Kammer (K2) des Gassackes von dem Gasdruck in der ersten Kammer (K1) des Gassackes abhängt,
**dadurch gekennzeichnet,**
**dass** die Zwischenlage (3) an der unteren Gassacklage (1) festgelegt und derart versetzt bezüglich der unteren Gassacklage (1) angeordnet ist, dass der Abstand zwischen einem umlaufenden äußeren Rand (31) der Zwischenlage (3) und einem umlaufenden äußeren Rand (11) der unteren Gassacklage (1) entlang des umlaufenden äußeren Randes (31) der Zwischenlage (3) variiert.

2. Gassack nach Anspruch 1, **dadurch gekennzeichnet, dass** die Zwischenlage (3) ausschließlich mit der unteren Gassacklage (1) verbunden ist.

3. Gassack nach Anspruch 1 oder 2, **dadurch gekennzeichnet, dass** die Zwischenlage (3) entlang eines umlaufenden äußeren Randes (31) mit der unteren Gassacklage (1) verbunden ist.

4. Gassack nach einem der vorhergehenden Ansprüche, **dadurch gekennzeichnet, dass** die Verbindungsstellen (V) zwischen der Zwischenlage (3) und der ersten Gassacklage (1) von den Verbindungsstellen (N) zwischen der oberen Gassacklage (2) und der unteren Gassacklage (1) beabstandet sind.

5. Gassack nach einem der vorhergehenden Ansprüche, **dadurch gekennzeichnet, dass** die Zwischenlage (3) mit der ersten Gassacklage (1) vernäht ist.

6. Gassack nach einem der vorhergehenden Ansprüche, **dadurch gekennzeichnet, dass** bei vollständig aufgeblasenem Gassack das Volumen der ersten Kammer (K1) des Gassackes größer ist als das Volumen (K2) der zweiten Kammer des Gassackes.

7. Gassack nach Anspruch 6, **dadurch gekennzeichnet, dass** das Verhältnis der Volumina der ersten Kammer (K1) des Gassackes und der zweiten Kammer (K2) des Gassackes zwischen 3:2 und 3:1 liegt.

8. Gassack nach einem der vorhergehenden Ansprüche, **dadurch gekennzeichnet, dass** die erste Kammer (K1) des Gassackes von der unteren Gassacklage (1) und der Zwischenlage (3) begrenzt ist und die zweite Kammer (K2) des Gassackes von der oberen Gassacklage (2) und der Zwischenlage (3) sowie einem Teil der unteren Gassacklage (1) begrenzt ist.

9. Gassack nach einem der vorhergehenden Ansprüche, **dadurch gekennzeichnet, dass** die Austrittsmittel durch mindestens eine Austrittsöffnung (35, 35a, 35b, 36a, 36b) zwischen der ersten Kammer (K1) und der zweiten Kammer (K2) des Gassackes gebildet werden.

10. Gassack nach Anspruch 9, **dadurch gekennzeichnet, dass** die Austrittsmittel in der Zwischenlage (3) des Gassackes vorgesehen sind.

11. Gassack nach Anspruch 9 oder 10, **dadurch gekennzeichnet, dass** die Austrittsmittel zumindest eine permanent offene Austrittsöffnung (35) umfassen.

12. Gassack nach einem der Ansprüche 9 bis 11, **dadurch gekennzeichnet, dass** die Austrittsmittel zumindest eine druckgesteuerte Austrittsöffnung (33, 34; 35a, 35b; 36a, 36b) umfassen.

13. Gassack nach einem der Ansprüche 9 bis 12, **dadurch gekennzeichnet, dass** die Austrittsmittel durch eine Kombination mindestens einer permanent offenen und mindestens einer druckgesteuerten Austrittsöffnung (33, 34; 35a, 35b; 36a, 36b) gebildet werden.

14. Gassack nach Anspruch 12 oder 13, **dadurch gekennzeichnet, dass** die Drucksteuerung der Austrittsmittel durch mindestens ein Verschlusselement (32, 37, 39) erfolgt, das beim Überschreiten eines vorgebbaren Druckes die zugeordnete Austrittsöffnung freigibt.

15. Gassack nach Anspruch 14, **dadurch gekennzeichnet, dass** das Verschlusselement (32, 37, 39) durch eine Lasche (32, 39) gebildet wird, die zum Freigeben der zugeordneten Austrittsöffnung abreißbar oder zerstörbar ist.

16. Gassack nach Anspruch 14 oder 15, **dadurch gekennzeichnet, dass** das Verschlusselement (37, 39) Schwächungsbereiche 38, 38a, 38b) zur Bildung von Sollreißstellen aufweist.

17. Gassack nach einem der Ansprüche 14 bis 16, **dadurch gekennzeichnet, dass** das Verschlusselement (32, 37) einstückig mit einer Lage (3) des Gassackes geformt ist.

18. Gassack nach Anspruch 17, **dadurch gekennzeichnet, dass** das Verschlusselement (32, 37) einstückig mit der Zwischenlage (3) des Gassackes geformt ist.

19. Gassack nach Anspruch 16 und Anspruch 17 oder 18, **dadurch gekennzeichnet, dass** der Schwächungsbereich (38, 38a) des Verschlusselementes (37) durch Perforationen oder Einkerbungen gebildet wird.

20. Gassack nach einem der Ansprüche 14 bis 16, **dadurch gekennzeichnet, dass** das Verschlusselement (39) durch ein separates, mit mindestens einer Lage (1, 3) des Gassackes verbundenes Element gebildet wird.

21. Gassack nach Anspruch 20, **dadurch gekennzeichnet, dass** das Verschlusselement (39) mit der Zwischenlage (3) des Gassackes verbunden ist.

22. Gassack nach Anspruch 16 und Anspruch 20 oder 21, **dadurch gekennzeichnet, dass** der Schwächungsbereich durch Befestigungsmittel (M, R) zur Befestigung des Verschlusselementes (39) an einer Gassacklage (3) gebildet wird.

23. Gassack nach Anspruch 20, **dadurch gekennzeichnet, dass** der Schwächungsbereich (R) durch eine Reißnaht gebildet wird, über die das Verschlusselement (39) mit der Gassacklage (3) verbunden ist.

24. Gassack nach Anspruch 22, **dadurch gekennzeichnet, dass** der Schwächungsbereich (M) durch einen zerstörbaren Materialabschnitt gebildet wird, über den das Verschlusselement (39) mit der Gassacklage (3) verbunden ist.

25. Gassack nach einem der Ansprüche 12 bis 24, **dadurch gekennzeichnet, dass** die druckgesteuerte Austrittsöffnung (33, 34) durch mindestens einen Schlitz in einer der Lagert (1, 2, 3) des Gassackes definiert ist, in dessen Umgebung die mit dem Schlitz versehene Lage (3) des Gassackes zum Öffnen der Austrittsöffnung aufreißen kann.

26. Gassack nach Anspruch 25, **dadurch gekennzeichnet, dass** der mindestens eine Schlitz (33, 34) derart angeordnet und ausgebildet ist, dass die Gassacklage (3) vom Schlitz ausgehend entlang mindestens einer Aufreißlinie (A) bis zum äußeren Rand (31) der Lage (3) aufreißen kann.

27. Gassack nach Anspruch 25 oder 26, **dadurch gekennzeichnet, dass** die mit dem mindestens einen Schlitz (33, 34) versehene Lage (3) des Gassackes die Zwischenlage des Gassackes ist.

28. Gassack nach einem der vorhergehenden Ansprüche, **dadurch gekennzeichnet, dass** mindestens eine Abströmöffnung (15, 17) vorgesehen ist, durch die hindurch Gas aus der ersten Kammer (K1) und/oder der zweiten Kammer (K2) des Gassackes in die Umgebung entweichen kann.

29. Gassack nach Anspruch 28, **dadurch gekennzeichnet, dass** die mindestens eine Abströmöffnung (15.17,18) in der unteren Gassacklage (1) vorgesehen ist.

30. Gassack nach Anspruch 28 oder 29, **dadurch gekennzeichnet, dass** die jeweilige Abströmöffnung (15, 17, 18) als eine permanent offene oder eine druckgesteuerte Öffnung ausgebildet ist.

31. Gassack nach Anspruch 30, **dadurch gekennzeichnet, dass** sowohl mindestens eine druckgesteuerte Abströmöffnung (15, 18) als auch mindestens eine permanent offene Abströmöffnung (17) vorgesehen ist.

32. Gassack nach einem der vorhergehenden Ansprüche, **dadurch gekennzeichnet, dass** er ausgebildet und vorgesehen ist zur Verwendung in einem Front-Airbagmodul eines Kraftfahrzeugs.

33. Gassack nach Anspruch 32, **dadurch gekennzeichnet, dass** er ausgebildet und vorgesehen ist zum Einsatz in einem Fahrer-Airbagmodul eines Kraftfahrzeugs.

34. Airbageinrichtung für ein Kraftfahrzeug mit einem Gassack, der in einem Crash-Fall zum Schutz eines Fahrzeuginsassen aufblasbar ist, und mit einer Aufblaseinrichtung zum Aufblasen des Gassackes, **gekennzeichnet durch** eine Ausbildung des Gassackes nach einem der vorhergehenden Ansprüche.

35. Airbageinrichtung nach Anspruch 34, **dadurch gekennzeichnet, dass** die Aufblaseinrichtung durch einen mehrstufigen Gasgenerator gebildet wird, so dass der Gassack in Abhängigkeit von der Anzahl der gezündeten Stufen des Gasgenerators mit einer unterschiedlichen Menge an Gas befüllbar ist.

36. Verfahren zum Aufblasen eines Gassackes nach einem der Ansprüche 1 bis 33, wobei
a) in Abhängigkeit von einem Signal, das repräsentativ für die Größe und/oder das Gewicht und/oder die Position eines mit dem Gassack zu schützenden Fahrzeuginsassen ist, mittels einer Aufblaseinrichtung wahlweise eine erste Menge oder eine zweite, größere Menge Gas durch die Gaseintrittsöffnung (10) in die erste Kammer (K1) des Gassackes eingeleitet wird,
b) bei Einleitung der ersten Gasmenge im Wesentlichen lediglich die erste Kammer (K1) des Gassackes aufgeblasen wird, die durch die untere Gassacklage (1) und die Zwischenlage (3) umschlossen ist, und das zum Aufblasen der ersten Kammer (K1) dienende Gas anschließend zum Energieabbau durch die Austrittsmittel (35; 35a, 35b; 36a, 36b) aus der ersten Kammer (K1) in die zweite Kammer (K2) abgelassen wird oder
c) bei Einleitung der zweiten, größeren Gasmenge in die erste Kammer (K1) des Gassackes beide Kammern (K1, K2) aufgeblasen werden, so dass sie im Wesentlichen den gleichen Innendruck aufweisen, indem beim Aufblasen des Gassackes Gas aus der ersten Kammer (K1) durch die Austrittsmittel (35; 35a, 35b; 36a, 36b) in die zweite Kammer (K2) des Gassackes strömt,
wobei zumindest ein Teil der Austrittsmittel (33, 34; 35; 35a, 35b; 36a, 36b), durch die Gas aus der ersten Kammer (K1) in die zweite Kammer (K2) gelangt, druckgesteuert ausgebildet ist, so dass der Strömungsquerschnitt der Austrittsmittel von dem Innendruck des Gases in der ersten Kammer (K1) abhängt und in Abhängigkeit davon gesteuert ist, ob die erste Gasmenge oder die zweite, größere Gasmenge in den Gassack geleitet wird, und
wobei die Austrittsmittel (33, 34; 35a, 35b; 36a, 36b) einen größeren Querschnitt aufweisen, wenn die zweite, größere Gasmenge in den Gassack geleitet wird.

37. Verfahren nach Anspruch 36, **dadurch gekennzeichnet, dass** die Vergrößerung des Querschnitts der Austrittsmittel (33, 34; 35a, 35b; 36a, 36b) durch den erhöhten Innendruck der ersten Kammer (K1) des Gassackes beim Einleiten der zweiten, größeren Menge Gas in den Gassack bewirkt wird.

38. Verfahren nach Anspruch 37, **dadurch gekennzeichnet, dass** der erhöhte Innendruck in der ersten Kammer (K1) des Gassackes beim Einleiten der zweiten, größeren Gasmenge ein den Austrittsmitteln (33, 34; 35a, 35b; 36a, 36b) zugeordnetes Verschlusselement (37, 39) zerstört oder abreißt.

## Claims

1. Gas bag for an airbag module of a motor vehicle which may be filled with gas in the event of a crash for protecting an occupant of the vehicle, comprising
- an upper gas bag layer (2) and a lower gas bag layer (1) which are connected to each other for forming a gas bag, the upper gas bag layer (2) facing the occupant of the vehicle to be protected when installing the gas bag for its intended purpose in an airbag module in the inflated state,
- an intermediate layer (3) arranged between the upper gas bag layer (2) and the lower gas bag layer (1) and which divides the interior of the gas bag, which is encompassed by the upper gas bag layer (2) and the lower gas bag layer (1), into two chambers (K1, K2),
- a gas inlet aperture (10) through which gas originating from an inflation device is able to enter the first chamber (K1) of the gas bag formed by the lower gas bag layer (1) and the intermediate layer (3), and
- outlet means (33, 34; 35a, 35b; 36a, 36b), through which gas from the first chamber (K1) of the gas bag is able to enter the second chamber (K2) of the gas bag encompassed by the intermediate layer (3) and the upper gas bag layer (2), so that according to the amount of gas introduced into the gas bag through the inlet aperture, substantially only the first chamber (K1) or both chambers (K1, K2) of the gas bag are selectively filled with gas, and the outlet means (33, 34; 35a, 35b; 36a, 36b) are at least partially pressure-controlled, so that the gas outlet from the first chamber (K1) into the second chamber (K2) of the gas bag is dependent on the gas pressure in the first chamber (K1) of the gas bag,
**characterized in that**
the intermediate layer (3) is secured to the lower gas bag layer (1) and is arranged offset relative to the lower gas bag layer (1) such that the distance between a peripheral outer edge (31) of the intermediate layer (3) and a peripheral outer edge (11) of the lower gas bag layer (1) varies along the peripheral outer edge (31) of the intermediate layer (3).

2. Gas bag according to claim 1, **characterized in that** the intermediate layer (3) is connected exclusively to the lower gas bag layer (1).

3. Gas bag according to claim 1 or 2, **characterized in that** the intermediate layer (3) is connected to the lower gas bag layer (1) along a peripheral outer edge (31).

4. Gas bag according to one of the preceding claims, **characterized in that** the connecting points (V) between the intermediate layer (3) and the first gas bag layer (1) are distanced from the connecting points (N) between the upper gas bag layer (2) and the lower gas bag layer (1).

5. Gas bag according to one of the preceding claims, **characterized in that** the intermediate layer (3) is sewn to the first gas bag layer (1).

6. Gas bag according to one of the preceding claims, **characterized in that** when the gas bag is fully inflated the volume of the first chamber (K1) of the gas bag is greater than the volume (K2) of the second chamber of the gas bag.

7. Gas bag according to claim 6, **characterized in that** the ratio of the volumes of the first chamber (K1) of the gas bag and the second chamber (K2) of the gas bag is between 3:2 and 3:1.

8. Gas bag according to one of the preceding claims, **characterized in that** the first chamber (K1) of the gas bag is defined by the lower gas bag layer (1) and the intermediate layer (3) and the second chamber (K2) of the gas bag is defined by the upper gas bag layer (2) and the intermediate layer (3) as well as a portion of the lower gas bag layer (1).

9. Gas bag according to one of the preceding claims, **characterized in that** the outlet means are formed by at least one outlet aperture (35, 35a, 35b, 36a, 36b) between the first chamber (K1) and the second chamber (K2) of the gas bag.

10. Gas bag according to claim 9, **characterized in that** the outlet means are provided in the intermediate layer (3) of the gas bag.

11. Gas bag according to claim 9 or 10, **characterized in that** the outlet means comprise at least one permanently open outlet aperture (35).

12. Gas bag according to one of claims 9 to 11, **characterized in that** the outlet means comprise at least one pressure-controlled outlet aperture (33, 34; 35a, 35b; 36a, 36b).

13. Gas bag according to one of claims 9 to 12, **characterized in that** the outlet means are formed by a combination of at least one permanently open and at least one pressure-controlled outlet aperture (33, 34; 35a, 35b; 36a, 36b).

14. Gas bag according to claim 12 or 13, **characterized in that** the pressure control of the outlet means is carried out by at least one closure element (32, 37, 39) which opens the associated outlet aperture when a predeterminable pressure is exceeded.

15. Gas bag according to claim 14, **characterized in that** the closure element (32, 37, 39) is formed by a tab (32, 39) which may be torn or ruptured for opening the associated outlet aperture.

16. Gas bag according to claim 14 or 15, **characterized in that** the closure element (37, 39) comprises weakened regions (38, 38a, 38b) for forming set tear points.

17. Gas bag according to one of claims 14 to 16, **characterized in that** the closure element (32, 37) is formed integrally with a layer (3) of the gas bag.

18. Gas bag according to claim 17, **characterized in that** the closure element (32, 37) is formed integrally with the intermediate layer (3) of the gas bag.

19. Gas bag according to claim 16 and claim 17 or 18, **characterized in that** the weakened region (38, 38a) of the closure element (37) is formed by perforations or notches.

20. Gas bag according to one of claims 14 to 16, **characterized in that** the closure element (39) is formed by a separate element connected to at least one layer (1, 3) of the gas bag.

21. Gas bag according to claim 20, **characterized in that** the closure element (39) is connected to the intermediate layer (3) of the gas bag.

22. Gas bag according to claim 16 and claim 20 or 21, **characterized in that** the weakened region is formed by fastening means (M, R) for fastening the closure element (39) to a gas bag layer (3).

23. Gas bag according to claim 20, **characterized in that** the weakened region (R) is formed by a tear seam via which the closure element (39) is connected to the gas bag layer (3).

24. Gas bag according to claim 22, **characterized in that** the weakened region (M) is formed by a rupturable material portion via which the closure element (39) is connected to the gas bag layer (3).

25. Gas bag according to one of claims 12 to 24, **characterized in that** the pressure-controlled outlet aperture (33, 34) is defined by at least one slot in one of the layers (1, 2, 3) of the gas bag, in the surroundings thereof the layer (3) of the gas bag provided with the slot being able to tear open, to open the outlet aperture.

26. Gas bag according to claim 25, **characterized in that** the at least one slot (33, 34) is arranged and configured such that the gas bag layer (3) is able to tear open starting from the slot, along at least one tear line (A) as far as the outer edge (31) of the layer (3).

27. Gas bag according to claim 25 or 26, **characterized in that** the layer (3) of the gas bag provided with the at least one slot (33, 34) is the intermediate layer of the gas bag.

28. Gas bag according to one of the preceding claims, **characterized in that** at least one vent hole (15, 17) is provided through which gas may escape from the first chamber (K1) and/or the second chamber (K2) of the gas bag into the surroundings.

29. Gas bag according to claim 28, **characterized in that** the at least one vent hole (15, 17, 18) is provided in the lower gas bag layer (1).

30. Gas bag according to claim 28 or 29, **characterized in that** the respective vent hole (15, 17, 18) is configured as a permanently open or a pressure-controlled aperture.

31. Gas bag according to claim 30, **characterized in that** at least one pressure-controlled vent hole (15, 18) and at least one permanently open vent hole (17) are both provided.

32. Gas bag according to one of the preceding claims, **characterized in that** it is configured and provided for use in a front airbag module of a motor vehicle.

33. Gas bag according to claim 32, **characterized in that** it is configured and provided for use in a driver airbag module of a motor vehicle.

34. Airbag device for a motor vehicle with a gas bag which may be inflated in the event of a crash for protecting an occupant of the vehicle, and comprising an inflation device for inflating the gas bag, **characterized by** a design of gas bag according to one of the preceding claims.

35. Airbag device according to claim 34, **characterized in that** the inflation device is formed by a multi-stage gas generator, so that the gas bag may be filled with a variable amount of gas depending on the number of triggered stages of the gas generator.

36. Method for inflating a gas bag according to one of claims 1 to 33,
a) depending on a signal, which is representative of the size and/or the weight and/or the position of an occupant of the vehicle to be protected by the gas bag, selectively a first amount or a second, larger amount of gas being introduced through the gas inlet aperture (10) into the first chamber (K1) of the gas bag, by means of an inflation device,
b) when introducing the first amount of gas substantially only the first chamber (K1) of the gas bag, which is encompassed by the lower gas bag layer (1) and the intermediate layer (3), being inflated and the gas serving to inflate the first chamber (K1) subsequently being discharged for energy reduction through the outlet means (35; 35a, 35b; 36a, 36b) from the first chamber (K1) into the second chamber (K2) or
c) when introducing the second, larger amount of gas into the first chamber (K1) of the gas bag, both chambers (K1, K2) being inflated, so that they have substantially the same internal pressure, gas flowing out of the first chamber (K1) through the outlet means (35; 35a, 35b; 36a, 36b) into the second chamber (K2) of the gas bag when inflating the gas bag, at least one portion of the outlet means (33, 34; 35; 35a, 35b; 36a, 36b), by means of which gas enters from the first chamber (K1) into the second chamber (K2), being configured to be pressure-controlled, so that the flow cross section of the outlet means depends on the internal pressure of the gas in the first chamber (K1) and is controlled according to whether the first amount of gas or the second, larger amount of gas is supplied into the gas bag, and
the outlet means (33, 34; 35a, 35b; 36a, 36b) having a larger cross section when the second, larger amount of gas is supplied into the gas bag.

37. Method according to claim 36, **characterized in that** the enlargement of the cross section of the outlet means (33, 34; 35a, 35b; 36a, 36b) is effected by the increased internal pressure of the first chamber (K1) of the gas bag when introducing the second, larger amount of gas into the gas bag.

38. Method according to claim 37, **characterized in that** the increased internal pressure in the first chamber (K1) of the gas bag when introducing the second, larger amount of gas ruptures or tears a closure element (37, 39) associated with the outlet means (33, 34; 35a, 35b; 36a, 36b).

## Revendications

1. Sac à gaz pour un module d'airbag d'un véhicule automobile, qui peut être rempli de gaz dans le cas d'une collision pour la protection d'un passager du véhicule, comprenant
- une couche de sac à gaz supérieure (2) et une couche de sac à gaz inférieure (1), lesquelles sont reliées l'une à l'autre pour former un sac à gaz, la couche supérieure (2) étant, lors du montage du sac à gaz de manière conforme à sa destination dans un module d'airbag, tournée vers le passager du véhicule à protéger dans l'état gonflé,
- une couche intermédiaire (3) disposée entre la couche de sac à gaz supérieure (2) et la couche de sac à gaz inférieure (1), qui subdivise l'espace intérieur du sac à gaz enfermé par la couche de sac à gaz supérieure (2) et par la couche de sac à gaz inférieure (1) en deux chambres (K1 , K2),
- une ouverture d'entrée de gaz (10) à travers laquelle du gaz provenant d'un dispositif de soufflage est capable de parvenir dans la première chambre (K1) du sac à gaz formée entre la couche de sac à gaz inférieure (1) et la couche intermédiaire (3), et
- des moyens de sortie (33, 34 ; 35a, 35b ; 36a, 36b) à travers lesquels le gaz provenant de la première chambre (K1) du sac à gaz est capable de parvenir dans la deuxième chambre (K2) du sac à gaz enfermée par la couche intermédiaire (3) et par la couche de sac à gaz supérieure (2), de sorte que selon la quantité du gaz introduit dans le sac à gaz à travers l'ouverture d'entrée on remplit au choix sensiblement uniquement la première chambre (K1) ou les deux chambres (K1, K2) du sac à gaz, et les moyens de sortie (33, 34 ; 35a, 35b ; 36a, 36b) sont au moins partiellement commandés en pression, de sorte que la sortie de gaz provenant de la première chambre (K1) vers la deuxième chambre (K2) du sac à gaz dépend de la pression du gaz dans la première chambre (K1) du sac à gaz,
**caractérisé en ce que**
la couche intermédiaire (3) est fixée à la couche de sac à gaz inférieure (1) et agencée de manière décalée par rapport à la couche de sac à gaz inférieure (1) de telle façon que la distance entre une bordure extérieure périphérique (31) de la couche intermédiaire (3) et une bordure extérieure périphérique (11) de la couche de sac à gaz inférieure (1) varie le long de la bordure extérieure périphérique (31) de la couche intermédiaire (3).

2. Sac à gaz selon la revendication 1, **caractérisé en ce que** la couche intermédiaire (3) est reliée exclusivement à la couche de sac à gaz inférieure (1) du sac à gaz.

3. Sac à gaz selon la revendication 1 ou 2, **caractérisé en ce que** la couche intermédiaire (3) est reliée à la couche de sac à gaz inférieure (1) le long d'une bordure extérieure périphérique (31).

4. Sac à gaz selon l'une des revendications précédentes, **caractérisé en ce que** les emplacements de liaison (V) entre la couche intermédiaire (3) et la première couche de sac à gaz (1) sont situés à distance des emplacements de liaison (N) entre la couche de sac à gaz supérieure (2) et la couche de sac à gaz inférieure (1) du sac à gaz.

5. Sac à gaz selon l'une des revendications précédentes, **caractérisé en ce que** la couche intermédiaire (3) est cousue avec la première couche de sac à gaz (1).

6. Sac à gaz selon l'une des revendications précédentes, **caractérisé en ce que**, quand le sac à gaz est totalement gonflé, le volume de la première chambre (K1) du sac à gaz est supérieur au volume de la deuxième chambre (K2) du sac à gaz.

7. Sac à gaz selon la revendication 6, **caractérisé en ce que** le rapport du volume de la première chambre (K1) du sac à gaz sur celui de la deuxième chambre (K2) du sac à gaz se trouve entre 3:2 et 3:1.

8. Sac à gaz selon l'une des revendications précédentes, **caractérisé en ce que** la première chambre (K1) du sac à gaz est limitée par la couche de sac à gaz inférieure (1) et par la couche intermédiaire (3), et la deuxième chambre (K2) du sac à gaz est limitée par la couche de sac à gaz supérieure (2) et la couche intermédiaire (3) ainsi que par une partie de la couche de sac à gaz inférieure (1).

9. Sac à gaz selon l'une des revendications précédentes, **caractérisé en ce que** les moyens de sortie sont formés par au moins une ouverture de sortie (35, 35a, 35b, 36a, 36b) entre la première chambre (K1) et la deuxième chambre (K2) du sac à gaz.

10. Sac à gaz selon la revendication 9, **caractérisé en ce que** les moyens de sortie sont prévus dans la couche intermédiaire (3) du sac à gaz.

11. Sac à gaz selon la revendication 9 ou 10, **caractérisé en ce que** les moyens de sortie comprennent au moins une ouverture de sortie (35) ouverte en permanence.

12. Sac à gaz selon l'une des revendications 9 à 11, **caractérisé en ce que** les moyens de sortie comprennent au moins une ouverture de sortie (33, 34 ; 35a, 35b ; 36a, 36b) commandée en pression.

13. Sac à gaz selon l'une des revendications 9 à 12, **caractérisé en ce que** les moyens de sortie sont formés par une combinaison d'au moins une ouverture de sortie ouverte en permanence et d'au moins une ouverture de sortie commandée en pression (33, 34 ; 35a, 35b ; 36a, 36b).

14. Sac à gaz selon la revendication 12 ou 13, **caractérisé en ce que** la commande en pression des moyens de sortie a lieu grâce à au moins un élément obturateur (32, 37, 39), qui dégage l'ouverture de sortie associée en cas de dépassement d'une pression prédéterminée.

15. Sac à gaz selon la revendication 14, **caractérisé en ce que** l'élément d'obturation (32, 37, 39) est formé par une languette (32, 39) qui peut être arrachée ou détruite pour libérer l'ouverture de sortie associée.

16. Sac à gaz selon la revendication 14 ou 15, **caractérisé en ce que** l'élément d'obturation (37, 39) comporte des zones d'affaiblissement (38, 38a, 38b) pour former les emplacements de rupture de consigne.

17. Sac à gaz selon l'une des revendications 14 à 16, **caractérisé en ce que** l'élément d'obturation (32, 37) est formé d'un seul tenant avec une couche (3) du sac à gaz.

18. Sac à gaz selon la revendication 17, **caractérisé en ce que** l'élément d'obturation (32, 37) est formé d'un seul tenant avec la couche intermédiaire (3) du sac à gaz.

19. Sac à gaz selon la revendication 16 et la revendication 17 ou 18, **caractérisé en ce que** la zone de d'affaiblissement (38, 38a) de l'élément d'obturation (37) est formé par des perforations ou des encoches.

20. Sac à gaz selon l'une des revendications 14 à 16, **caractérisé en ce que** l'élément d'obturation (39) est formé par un élément séparé relié à au moins une couche (1, 3) du sac à gaz.

21. Sac à gaz selon la revendication 20, **caractérisé en ce que** l'élément d'obturation (39) est relié à la couche intermédiaire (3) du sac à gaz.

22. Sac à gaz selon la revendication 16 et la revendication 20 ou 21, **caractérisé en ce que** la zone d'affaiblissement est formée par des moyens de fixation (M, R) pour la fixation de l'élément d'obturation (39) sur une couche (3) du sac à gaz.

23. Sac à gaz selon la revendication 20, **caractérisé en ce que** la zone d'affaiblissement (R) est formée par une couture à arracher, via laquelle l'élément d'obturation (39) est relié à la couche (3) du sac à gaz.

24. Sac à gaz selon la revendication 22, **caractérisé en ce que** la zone d'affaiblissement (M) est formée par un tronçon de matériau destructible, via lequel l'élément d'obturation (39) est relié à la couche (3) du sac à gaz.

25. Sac à gaz selon l'une des revendications 12 à 24, **caractérisé en ce que** l'ouverture de sortie commandée en pression (33, 34) est définie par au moins une fente dans l'une des couches (1,2, 3) du sac à gaz, au voisinage de laquelle la couche (3) du sac à gaz dotée de la fente peut s'arracher pour ouvrir l'ouverture de sortie.

26. Sac à gaz selon la revendication 25, **caractérisé en ce que** ladite au moins une fente (33, 34) est agencée et réalisée de telle façon que la couche (3) du sac à gaz peut s'arracher, en partant de la fente, le long d'au moins une ligne d'arrachement (A) jusqu'à la bordure extérieure (31) de la couche (3).

27. Sac à gaz selon la revendication 25 ou 26, **caractérisé en ce que** la couche (3) du sac à gaz pourvue de ladite au moins une fente (33, 34) est la couche intermédiaire du sac à gaz.

28. Sac à gaz selon l'une des revendications précédentes, **caractérisé en ce qu'**il est prévu au moins une ouverture d'évacuation (15, 17) à travers laquelle du gaz provenant de la première chambre (K1) et/ou de la deuxième chambre (K2) du sac à gaz peut s'échapper vers l'environnement.

29. Sac à gaz selon la revendication 28, **caractérisé en ce que** ladite au moins une ouverture d'évacuation (15, 17, 18) est prévue dans la couche de sac à gaz inférieure (1).

30. Sac à gaz selon la revendication 28 ou 29, **caractérisé en ce que** l'ouverture d'évacuation respective (15, 17, 18) est réalisée sous la forme d'une ouverture ouverte en permanence ou d'une ouverture commandée en pression.

31. Sac à gaz selon la revendication 30, **caractérisé en ce qu'**il est prévu aussi bien au moins une ouverture d'évacuation commandée en pression (15, 18), qu'au moins une ouverture d'évacuation (17) ouverte en permanence.

32. Sac à gaz selon l'une des revendications précédentes, **caractérisé en ce qu'**il est réalisé et prévu pour être utilisé dans un module d'airbag avant d'un véhicule automobile.

33. Sac à gaz selon la revendication 32, **caractérisé en ce qu'**il est réalisé et prévu hors être employé dans un module d'airbag de conducteur d'un véhicule automobile.

34. Système d'airbag pour un véhicule automobile, comprenant un sac à gaz susceptible d'être gonflé dans le cas d'une collision pour la protection d'un occupant du véhicule automobile, et comprenant un système de soufflage pour gonfler le sac à gaz, **caractérisé par** une réalisation du sac à gaz selon l'une des revendications précédentes.

35. Système d'airbag selon la revendication 34, **caractérisé en ce que** le système de gonflage est formé par un générateur à gaz à plusieurs étages, de sorte que le sac à gaz est susceptible d'être rempli d'une quantité différente de gaz en fonction du nombre des étages déclenchés du générateur à gaz.

36. Procédé pour gonfler un sac à gaz selon l'une des revendications 1 à 33, dans lequel :
a) en fonction d'un signal qui est représentatif pour la taille et/ou le poids et/ou la position d'un occupant d'un véhicule qui doit être protégé avec le sac à gaz, au moyen d'un système de gonflage, au choix une première quantité ou une deuxième quantité plus élevée de gaz est introduite à travers l'ouverture d'entrée de gaz (10) jusque dans la première chambre (K1) du sac à gaz,
b) lors de l'injection de la première quantité de gaz sensiblement uniquement dans la première chambre (K1) du sac à gaz, laquelle est enfermée par la couche de sac à gaz inférieure (1) et par la couche intermédiaire (3), et le gaz servant à gonfler la première chambre (K1) est ensuite évacué, pour l'annulation de l'énergie, via les moyens de sortie (35 ; 35a, 35b ; 36a, 36b) hors de la première chambre (K1) jusque dans la deuxième chambre (K2), ou bien
c) lors de l'injection de la deuxième quantité de gaz plus élevée dans la première chambre (K1) du sac à gaz, les deux chambres (K1, K2) sont gonflées, de sorte qu'elles présentent sensiblement la même pression intérieure, en ce que, lors du gonflage du sac à gaz, du gaz s'écoule hors de la première chambre (K1) jusque dans la deuxième chambre (K2), au moins une partie des moyens de sortie (33, 34 ; 35 ; 35a, 35b ; 36a, 36b) via lesquels le gaz de la première chambre (K1) parvient dans la deuxième chambre (K2), étant réalisés avec une commande en pression de telle sorte que la section d'écoulement des moyens de sortie dépend de la pression intérieure du gaz dans la première chambre (K1) et est pilotée en fonction de savoir si la première quantité de gaz ou la deuxième quantité de gaz plus élevée est injectée dans le sac à gaz, et les moyens de sortie (33, 34 ; 35a, 35b ; 36a, 36b) présentant une section plus élevée quand la deuxième quantité de gaz plus élevée est injectée dans le sac à gaz.

37. Procédé selon la revendication 36, **caractérisé en ce que** l'agrandissement de la section des moyens de sortie (33, 34 ; 35a, 35b ; 36a, 36b) est provoquée par l'augmentation de la pression intérieure de la première chambre (K1) du sac à gaz lors de l'injection de la deuxième quantité plus élevée de gaz dans le sac à gaz.

38. Procédé selon la revendication 37, **caractérisé en ce que** l'augmentation de pression intérieure dans la première chambre (K1) du sac à gaz lors de l'injection de la deuxième quantité de gaz plus élevée détruit ou arrache un élément d'obturation (37, 39) associé aux moyens de sortie (33, 34 ; 35a, 35b ; 36a, 36b).
